# EUROPEAN PATENT APPLICATION

(11) **EP 4 823 108 A1**
(43) Date of publication of application: **14.10.2026**
(21) Application number: 26168038.3
(22) Date of filing: 26.03.2026
(51) Int. Cl.: H04N 23/667, H04N 23/60, H04N 23/65, H04N 23/66, H04N 7/00

(54) **CAMERA DEVICE, VIDEO PROVISION SYSTEM, VIDEO PROVISION METHOD, AND NON-TRANSITORY COMPUTER READABLE STORAGE MEDIUM**

(30) Priority: 08.04.2025 JP 2025063449
(71) Applicant: amnimo Inc., Musashino-shi, Tokyo 180-8750 (JP)
(72) Inventor: Kojima, Osamu, Musashino-shi, Tokyo, 180-8750 (JP); Wada, Atsushi, Musashino-shi, Tokyo, 180-8750 (JP)
(74) Representative: Grünecker Patent- und Rechtsanwälte PartG mbB

(57) **Abstract**

A camera device includes a camera configured to capture a video, a communication device configured to communicate with an external device, and a processor connected to the camera and the communication device. The processor is configured to control the communication device to execute one of a first mode in which a still image based on the video captured by the camera is transmitted at regular intervals, a second mode in which a short-time video based on the video captured by the camera is transmitted at regular intervals, and a third mode in which the video captured by the camera is transmitted continuously.

## Description

### BACKGROUND

### Technical Fields

The present disclosure relates to a camera device, a video provision system, a video provision method, and a non-transitory computer readable storage medium. Priority is claimed on Japanese Patent Application No. 2025-063449, filed on April 8, 2025, the contents of which are incorporated herein by reference.

### Description of Related Art

In recent years, there have been increased opportunities for using a video provision system that puts together videos captured by a monitoring camera or a portable camera and provides the videos to users. Such a video provision system is used for, for example, monitoring of equipment or facilities, monitoring of crowds in streets, or security. Further, in recent years, a video provision system in which an image processing device called an edge gateway is provided near a camera device, a still image is generated on the basis of a video captured by the camera device, and the still image is transmitted to a center system at regular intervals has also been developed (for example, "Enhanced Video Management System", [online], [retrieved on March 20, 2025], Internet <URL:https://amnimo.com/en/service/e_vms/>).

Incidentally, in the video provision system disclosed in "Enhanced Video Management System", [online], [retrieved on March 20, 2025], Internet <URL:https://amnimo.com/en/service/e_vms/>, because the still image is transmitted to the center system at regular intervals, there is an advantage that a data amount to be transmitted can be significantly reduced compared to a system that transmits a moving image. However, because the still image is smaller in amount of information than the moving image, it is considered that a problem occurs in terms of convenience. For example, it is considered to be difficult to ascertain movements of people at a place to be a monitoring target.

The present disclosure has been made in view of the above-described situation, and an object of the present disclosure is to provide a camera device, a video provision system, a video provision method, and a non-transitory computer readable storage medium capable of increasing convenience while suppressing a data amount of transmission data as much as possible.

### SUMMARY

To solve the above-described problem, a camera device (10) according to a first aspect of the present disclosure includes a camera (12) configured to capture a video, a communication device (11) configured to communicate with an external device (20), and a processor (18) connected to the camera and the communication device, in which the processor is configured to perform control such that the communication device executes one of a first mode in which a still image based on the video captured by the camera is transmitted at regular intervals, a second mode in which a short-time video based on the video captured by the camera is transmitted at regular intervals, and a third mode in which the video captured by the camera is transmitted continuously.

A camera device according to a second aspect of the present disclosure is the camera device according to the first aspect of the present disclosure, further including a storage unit (14) configured to store the video captured by the camera, in which the video captured by the camera may be stored in the storage unit when the processor executes the first mode or the second mode.

A camera device according to a third aspect of the present disclosure is the camera device according to the first or second aspect of the present disclosure, in which the processor may be configured to switch whether to execute the first mode, the second mode, or the third mode, according to a communication situation with the external device.

A camera device according to a fourth aspect of the present disclosure is the camera device according to any one of the first to third aspects of the present disclosure, further including a battery (19) configured to supply power to at least the processor, the camera, and the communication device, in which the processor may be configured to switch whether to execute the first mode, the second mode, or the third mode, according to a remaining amount of power of the battery.

A camera device according to a fifth aspect of the present disclosure is the camera device according to any one of the first to fourth aspects of the present disclosure, further including a sensor (15) configured to detect at least one of a position and an acceleration, in which the processor may be configured to switch whether to execute the first mode, the second mode, or the third mode, according to a detection result of the sensor.

A camera device according to a sixth aspect of the present disclosure is the camera device according to the fifth aspect of the present disclosure, in which the processor may be configured to switch to execute the first mode when determination is made that a movement speed of the camera device is equal to or higher than a predetermined speed, on the basis of the detection result of the sensor.

A camera device according to a seventh aspect of the present disclosure is the camera device according to any one of the first to sixth aspects of the present disclosure, in which the processor may be configured to switch whether to execute the first mode, the second mode, or the third mode, according to an analysis result of the video captured by the camera.

A camera device according to an eighth aspect of the present disclosure is the camera device according to the seventh aspect of the present disclosure, in which the processor may be configured to switch to execute the first mode when determination is made that an amount of change in video is equal to or smaller than a predetermined threshold, on the basis of analysis results of videos captured by the camera.

A camera device according to a ninth aspect of the present disclosure is the camera device according to the second aspect of the present disclosure, in which the processor may be configured to perform control such that the communication device transmits the video stored in the storage unit, when determination is made that a predetermined condition is satisfied.

A camera device according to a tenth aspect of the present disclosure is the camera device according to the ninth aspect of the present disclosure, in which the predetermined condition may include a condition that communication with the external device is possible via a communication network provided by a telecommunications carrier.

A video provision system (1) according to a first aspect of the present disclosure includes the camera device (10) according to any one of the first to tenth aspects of the present disclosure, and a video provision device (20) as the external device that is connected to the camera device in a communicative manner and is configured to provide the still image, the short-time video, and the video transmitted from the camera device.

A video provision system (1) according to a second aspect of the present disclosure is the video provision system according to the first aspect of the present disclosure, further including a terminal device (30) that is connected to the video provision device in a communicative manner and is configured to display the still image, the short-time video, and the video provided from the video provision device.

A video provision method according to an aspect of the present disclosure is a video provision method in a video provision system (1) including a camera device (10) configured to capture a video, and a video provision device (20) configured to provide the video captured by the camera device to an outside, the video provision method including, by the camera device, executing one of a first mode in which a still image based on the captured video is transmitted at regular intervals, a second mode in which a short-time video based on the captured video is transmitted at regular intervals, and a third mode in which the captured video is transmitted continuously, and by the video provision device, providing the still image, the short-time video, and the video transmitted from the camera device to the outside.

A non-transitory computer readable storage medium according to an aspect of the present disclosure is a non-transitory computer readable storage medium that stores a program that causes a computer (18) connected to a camera (12) configured to capture a video and a communication device (11) configured to communicate with an external device (20) to perform control such that the communication device executes one of a first mode in which a still image based on the video captured by the camera is transmitted at regular intervals, a second mode in which a short-time video based on the video captured by the camera is transmitted at regular intervals, and a third mode in which the video captured by the camera is transmitted continuously.

According to the present disclosure, there are effects capable of increasing convenience while suppressing a data amount of transmission data as much as possible.

Further features and aspects of the present disclosure will become apparent from the following detailed description of exemplary embodiments with reference to the attached drawings.

### BRIEF DESCRIPTION OF THE DRAWINGS

FIG. 1 is a diagram showing an overall configuration of a video provision system in an embodiment of the present disclosure.
FIG. 2 is a diagram showing a hardware configuration of a camera device in an embodiment of the present disclosure.
FIG. 3 is a flowchart illustrating an example of an operation of the camera device according to an embodiment of the present disclosure.
FIG. 4 is a flowchart showing an example of processing that is performed in Step S13 of FIG. 3.

### DETAILED DESCRIPTION OF THE EMBODIMENTS

Hereinafter, a camera device, video provision system, a video provision method, and a non-transitory computer readable storage medium according to an embodiment of the present disclosure will be described in detail with reference to the drawings.

### <Video Provision System>

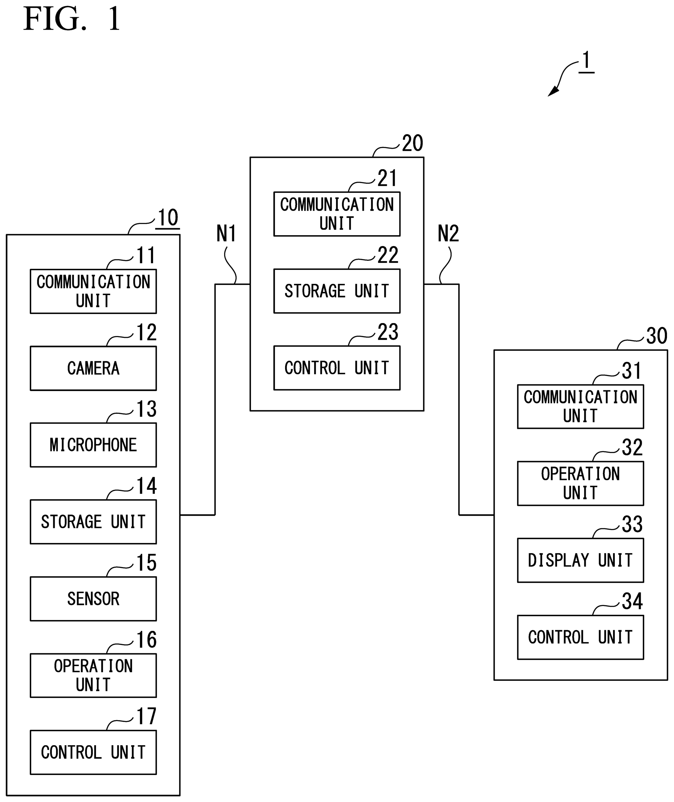

FIG. 1 is a diagram showing an overall configuration of a video provision system in an embodiment of the present disclosure. As shown in FIG. 1, a video provision system 1 includes a camera device 10, a video provision device 20, and a terminal device 30. The camera device 10 and the video provision device 20 are connected in a communicative manner via a network N1. The video provision device 20 and the terminal device 30 are connected in a communicative manner via a network N2.

The network N1 is, for example, a mobile communication network that is provided by a mobile network operator (MNO) or the like. The network N2 is a wide area network (WAN) such as the Internet. The network N1 may include a network for performing wired communication in addition to a network for performing wireless communication. Further, the network N2 may be one of a network in which wired communication is possible, a network in which wireless communication is possible, and a network in which both wired communication and wireless communication are possible.

### <Camera Device>

The camera device 10 is, for example, a portable camera, called a wearable camera or a body worn camera (BWC). The camera device 10 is used in a state of being mounted on, for example, a user such as a security guard. The camera device 10 is not limited to a portable camera, and may be a fixed camera that is provided at any place such as a monitoring camera or a security camera. For example, a pan/tilt/zoom (PTZ) camera, a 360-degree camera, or other cameras attached to a wall surface of a building, a utility pole, a telegraph pole, or the like may be used.

The PTZ camera is a camera in which panning, tilting, and zooming are possible by a remote operation. Panning is swinging in a horizontal (right-left) direction, tilting is swinging in a vertical (up-down) direction, and zooming is enlarging/reducing a captured image. The 360-degree camera is a camera that can capture an image in all directions of 360 degrees. In FIG. 1, while only one camera device 10 is shown, the number of camera devices 10 is freely selected.

As shown in FIG. 1, the camera device 10 includes a communication unit 11 (communication device), a camera 12, a microphone 13, a storage unit 14, a sensor 15, an operation unit 16, and a control unit 17. The communication unit 11 performs communication via the network N1 under the control of the control unit 17. For example, the communication unit 11 performs communication with the video provision device 20 (external device) via the network N1. The communication unit 11 may also perform communication with the video provision device 20 via a communication line (for example, a communication network that is provided by a telecommunications carrier such as the Internet) other than the network N1.

The camera 12 includes, for example, an imaging element such as a charge coupled device (CCD) sensor, a complementary metal oxide semiconductor (CMOS) sensor, and captures a video under the control of the control unit 17. The camera 12 outputs the captured video as a digital video signal. The microphone 13 includes, for example, a nondirectional high-sensitivity sound concentrating microphone, and acquires surrounding sound, vocal sound, or the like under the control of the control unit 17. The microphone 13 outputs the acquired surrounding sound or the like as a digital voice signal.

The storage unit 14 stores the digital video signal output from the camera 12 and the digital voice signal output from the microphone 13. For example, the storage unit 14 includes a slot where a memory card (storage medium) is attachable and detachable, and causes the memory card loaded in the slot to store the digital video signal output from the camera 12 and the digital voice signal output from the microphone 13.

The sensor 15 includes, for example, a position sensor or an acceleration sensor, and detects the presence or absence of movement of the camera device 10. As the position sensor, a sensor using a positioning function of a global navigation satellite system (GNSS) represented by a global positioning system (GPS) can be used. The position sensor is not limited to the sensor using the positioning function of the GNSS, and a sensor that detects a position using any positioning method can be used.

The operation unit 16 outputs an instruction (an instruction to the camera device 10) according to an operation of the user who uses the camera device 10, to the control unit 17. The camera device 10 may include a small display device such as a liquid crystal display. Alternatively, the camera device 10 may include, as the operation unit 16, a touch panel type display device having both a display function and an operation function.

The control unit 17 generally controls the operation of the camera device 10. For example, the control unit 17 performs control of causing the communication unit 11 to transmit the video captured by the camera 12 and causing the storage unit 14 to store the video captured by the camera 12. Here, as an aspect (mode) in which the video captured by the camera 12 is transmitted under the control of the control unit 17, there are three modes described below.
· a first mode in which a still image based on the video captured by the camera 12 is transmitted at regular intervals
· a second mode in which a short-time video based on the video captured by the camera 12 is transmitted at regular intervals
· a third mode in which the video captured by the camera 12 is transmitted continuously

The above-described first mode is a mode in which the control unit 17 generates a still image from the video captured by the camera 12 at regular intervals and causes the communication unit 11 to transmit the still image. A cycle in which the generation and transmission of the still image are performed is, for example, about tens of seconds to several minutes, but may be any period of time.

The above-described second mode is a mode in which the control unit 17 generates a short-time video from the video captured by the camera 12 and causes the communication unit 11 to transmit the short-time video. The short-time video is a video obtained by cutting the video captured by the camera 12 at a predetermined short-time. The above-described predetermined short-time is, for example, about several seconds to tens of seconds, but may be any period of time.

The above-described third mode is a mode in which the control unit 17 causes the communication unit 11 to transmit the video captured by the camera 12 continuously. The video that is transmitted in the third mode may be the video captured by the camera 12 itself or may be a video that is formed to reduce a data transfer amount (decrease a bit rate) of the video captured by the camera 12. Hereinafter, the video that is transmitted in the third mode is referred to as a "continuous video".

Providing these three modes is to increase convenience while suppressing a data amount of transmission data as much as possible. That is, when the video captured by the camera 12 is transmitted continuously, for example, movements of people at a place to be a monitoring target can be ascertained, but a data amount increases. In contrast, when the still image based on the video captured by the camera 12 is transmitted, a data amount can be reduced, but, for example, degradation of convenience occurs such as a case where movements of people at a place to be a monitoring target are not easily ascertained. Therefore, in the present embodiment, the three modes described above are provided, thereby achieving both suppression of the data amount of transmission data and improvement of convenience.

When the first mode and the second mode described above are executed, the control unit 17 causes the storage unit 14 to store the video captured by the camera 12. When the third mode described above is executed, the control unit 17 does not cause the storage unit 14 to store the video captured by the camera 12. This is because the video captured by the camera 12 is transmitted continuously to the video provision device 20 without omission. It should be noted that, in the third mode, when a data transfer amount is reduced by a method of decreasing a bit rate of a video to be transmitted, or the like, the captured video before the bit rate is decreased may be stored in the storage unit 14.

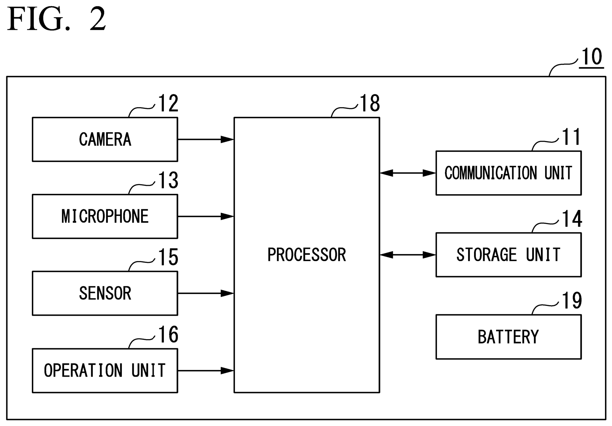

The control unit 17 switches whether to execute the first mode, the second mode, or the third mode described above, according to a situation of the camera device 10. Examples of the situation of the camera device 10 described above include a communication situation with the video provision device 20, a remaining amount of power of the battery 19 (see FIG. 2), the presence or absence of high-speed movement of the camera device 10, the presence or absence of change in video captured by the camera 12, and presetting by the user of the camera device 10.

The communication situation with the video provision device 20 described above is, for example, whether the communication unit 11 of the camera device 10 performs communication via the network N1 or performs communication via a communication line other than the network N1. The control unit 17 switches whether to execute the first mode, the second mode, or the third mode described above, according to a communication path of the communication unit 11. The network N1 is, for example, a mobile communication network that is provided by a mobile network operator or the like, and the communication line other than the network N1 is, for example, a communication network that is provided by a telecommunications carrier such as the Internet.

The remaining amount of power of the battery 19 described above is how much a charge amount of the battery 19 remains (battery remaining amount). For example, when the remaining amount of power of battery 19 is equal to or less than a predefined threshold, the control unit 17 determines that the remaining amount of power of the battery 19 is small. The control unit 17 switches whether to execute the first mode, the second mode, or the third mode described above, according to the remaining amount of power of battery 19.

The presence or absence of high-speed movement of the camera device 10 described above is, for example, whether the camera device 10 itself is moving at a high speed or is moving violently. When the camera device 10 is mounted on the user, such a situation may occur. The control unit 17 determines whether the camera device 10 is moving or stands still, according to a detection result of the sensor 15. The control unit 17 obtains a movement speed of the camera device 10 using the detection result of the sensor 15 and determines the presence or absence of high-speed movement of the camera device 10 according to whether the obtained movement speed is equal to or higher than a predetermined speed. The control unit 17 switches whether to execute the first mode, the second mode, or the third mode described above, according to a determination result.

The presence or absence of change in video captured by the camera 12 described above is, for example, whether a video captured by the camera 12 is changing over time. For example, the control unit 17 analyzes a video captured by the camera 12, compares analysis results of videos captured at different two points of time, and determines the presence or absence of change in video captured by the camera 12 according to whether an amount of change in video is equal to or greater than a predetermined threshold. The control unit 17 switches whether to execute the first mode, the second mode, or the third mode described above, according to a determination result.

The control unit 17 performs power saving control as necessary. For example, when a video is not captured by the camera 12, the control unit 17 suppress wasteful power consumption by stopping at least one of the communication unit 11 and the camera 12. The control unit 17 may stoop the microphone 13, the storage unit 14, the sensor 15, and the operation unit 16 in addition to the communication unit 11 and the camera 12. The control unit 17 may switch an operation mode from a normal mode to a low power consumption mode, thereby suppressing the power consumption thereof.

The control unit 17 causes the video stored in the storage unit 14 to be transmitted to the video provision device 20 when a predetermined condition is satisfied. An example of the above-described predetermined condition is a condition that the communication unit 11 can perform communication with the video provision device 20 via a communication line (for example, a communication network that is provided by a telecommunications carrier such as the Internet) by way of a wireless local area network (LAN) such as Wi-Fi(Registered Trademark). When the condition is satisfied, the video is transmitted to the video provision device 20 via the above-described communication line, not via the network N1 shown in FIG. 1. In this way, it is possible to reduce a communication amount of communication via the network N1.

FIG. 2 is a diagram showing a hardware configuration of the camera device in the embodiment of the present disclosure. In FIG. 2, the same reference numbers are attached to the configurations corresponding to the configurations shown in FIG. 1. As shown in FIG. 2, the camera device 10 includes a processor 18 and the battery 19 in addition to the communication unit 11, the camera 12, the microphone 13, the storage unit 14, the sensor 15, and the operation unit 16.

The processor 18 is, for example, a central processing unit (CPU) or a micro processing unit (MPU). To the processor 18, the communication unit 11, the camera 12, the microphone 13, the storage unit 14, the sensor 15, and the operation unit 16 are connected. The functions of the control unit 17 shown in FIG. 1 are implemented by a program for implementing these functions being executed by the processor 18. That is, the functions of the control unit 17 are implemented by cooperation of software and hardware resources. The functions of the control unit 17 are implemented by cooperation of software and hardware resources, so that, for example, update, deletion, and addition of functions can be easily performed.

The functions of the control unit 17 are desirably implemented by cooperation of software and hardware resources, but this does not disturb implementation using dedicated hardware. The functions of the control unit 17 may be implemented using, for example, hardware such as a field-programmable gate array (FPGA), a large scale integration (LSI), or an application specific integrated circuit (ASIC).

The battery 19 supplies power for operating the camera device 10. Specifically, the battery 19 supplies power to the communication unit 11, the camera 12, the microphone 13, the storage unit 14, the sensor 15, the operation unit 16, and the processor 18. The battery 19 may be a primary battery or a secondary battery. Alternatively, the battery 19 may be a fuel cell, a capacitor, a device including a power generation circuit that performs environmental power generation (so-called energy harvest such as a solar cell), or the like.

### <Video Provision Device>

The video provision device 20 is connected to the camera device 10 and the terminal device 30 in a communicative manner. The video provision device 20 provides a still image, a short-time video, and a continuous video that are transmitted from the camera device 10, to the terminal device 30. The video provision device 20 provides a still image to the terminal device 30 in an aspect in which the content is switched to a new still image each time a still image is transmitted from the camera device 10. The video provision device 20 provides a short-time video in an aspect in which a short-time video transmitted from the camera device 10 is repeatedly reproduced until a next short-time video is transmitted. The video provision device 20 provides a continuous video in an aspect in which a video transmitted from the camera device 10 is reproduced directly.

The video provision device 20 includes a communication unit 21, a storage unit 22, and a control unit 23. The communication unit 21 communicates with the camera device 10 via the network N1 and communicates with the terminal device 30 via the network N2 under the control of the control unit 23. The communication unit 21 can communicate with the camera device 10 via a communication line (for example, a communication network that is provided by a telecommunications carrier such as the Internet) other than the network N1.

The storage unit 22 stores a still image, a short-time video, and a continuous video that are transmitted from the camera device 10, under the control of the control unit 23. The storage unit 22 can also store a still image and a video (moving image) that are transmitted from a fixed camera such as a monitoring camera or a security camera, under the control of the control unit 23. The storage unit 22 is implemented by, for example, a storage device such as a memory, a hard disk drive (HDD), or a solid state drive (SSD).

The control unit 23 is connected to the communication unit 21 and the storage unit 22, and generally controls the operation of the video provision device 20. The control unit 23 causes the storage unit 22 to store a still image, a short-time video, and a continuous video that are transmitted from the camera device 10. The control unit 23 may generate a composite image including a still image, a short-time video, and a continuous video that are transmitted from the camera device 10 or the like. The control unit 23 performs control such that the communication unit 21 outputs (provides), to the terminal device 30, a still image, a short-time video, and a continuous video transmitted from the camera device 10.

The control unit 23 can also perform an instruction to cause the camera device 10 to change a generation cycle of a still image and a transmission cycle of a generated still image on the basis of, for example, an instruction from the outside (for example, the terminal device 30). The control unit 23 may perform an instruction to cause the camera device 10 to change a generation cycle of a still image and a transmission cycle of a generated still image on the basis of an instruction of the user who uses the video provision device 20.

The functions of the video provision device 20 are implemented by a program for implementing these functions being executed by hardware such as a CPU. That is, the functions of the video provision device 20 are implemented by cooperation of software and hardware resources. The functions of the video provision device 20 are implemented by cooperation of software and hardware resources, so that, for example, update, deletion, and addition of functions can be easily performed.

The functions of the video provision device 20 are desirably implemented by cooperation of software and hardware resources, but this does not disturb implementation using dedicated hardware. The functions of the video provision device 20 may be implemented using, for example, hardware such as an FPGA, an LSI, or an ASIC.

### <Terminal Device>

The terminal device 30 is connected to the video provision device 20 in a communicative manner, receives a still image, a short-time video, and a continuous video that are provided from the video provision device 20, and performs a necessary instruction to the video provision device 20. The terminal device 30 is, for example, a desktop type, a notebook type, or a tablet type computer or a smartphone, and is used in, for example, a monitoring center.

The terminal device 30 includes a communication unit 31, an operation unit 32, a display unit 33, and a control unit 34. The communication unit 31 performs communication via the network N2 under the control of the control unit 34. Specifically, the communication unit 31 performs communication with the video provision device 20 via the network N2.

The operation unit 32 includes, for example, an input device such as a keyboard and a pointing device, and outputs an instruction (an instruction to the terminal device 30) according to an operation of the user who uses the terminal device 30, to the control unit 34. The display unit 33 includes, for example, a display device such as a liquid crystal display, and displays various kinds of information that are output from the control unit 34. The operation unit 32 and the display unit 33 may be physically separated or may be physically integrated like a touch panel type liquid crystal display having both a display function and an operation function.

The display unit 33 may display a still image, a short-time video, and a continuous video on an external display. For example, the display unit 33 may display a still image, a short-time video, and a continuous video, or a composite image including these images or videos on a system (a video wall) in which a plurality of displays are arranged as one screen.

The control unit 34 generally controls the operation of the terminal device 30 on the basis of an operation instruction input from the operation unit 32. For example, the control unit 34 causes the display unit 33 to display a still image, a short-time video, and a continuous video that are provided from the video provision device 20 or a composite image including these images or videos according to an operation instruction input from the operation unit 32. Alternatively, the control unit 34 performs an instruction to cause the camera device 10 to change a cycle in which generation and transmission of a still image are performed, according to an operation instruction input from the operation unit 32.

### <Operation of Camera Device>

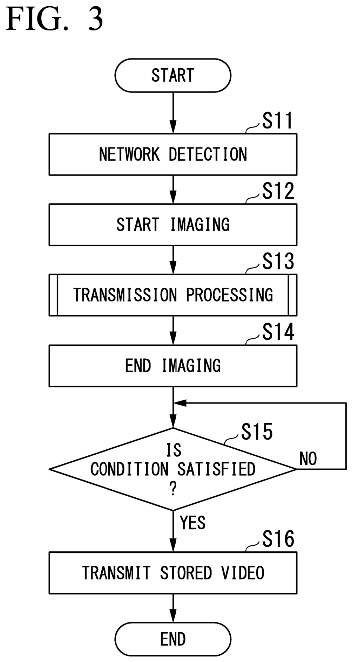

FIG. 3 is a flowchart illustrating an example of the operation of the camera device according to the embodiment of the present disclosure. The flowchart shown in FIG. 3 is started when power is supplied to the camera device 10.

When processing of the flowchart shown in FIG. 3 is started, first, the control unit 17 of the camera device 10 performs network detection (Step S11). Specifically, the control unit 17 detects whether communication via the network N1 or communication via a communication line (for example, a communication network that is provided by a telecommunications carrier such as the Internet) other than the network N1 by way of a wireless LAN is possible.

Here, for ease of understanding, it is assumed that both communication via the network N1 and communication via a communication line other than the network N1 by way of a wireless LAN are possible. Further, in an initial state, it is assumed that the camera device 10 is in a state in which communication via the network N1 is possible.

Next, the control unit 17 performs control such that the camera 12 starts image capturing (Step S12). The control unit 17 may perform control such that the camera 12 starts image capturing automatically after network detection ends or may perform control such that the camera 12 starts image capturing when there is an instruction to start image capturing from the operation unit 16 after network detection ends. When image capturing is started, the control unit 17 performs transmission processing of a video captured by the camera 12 (Step S13).

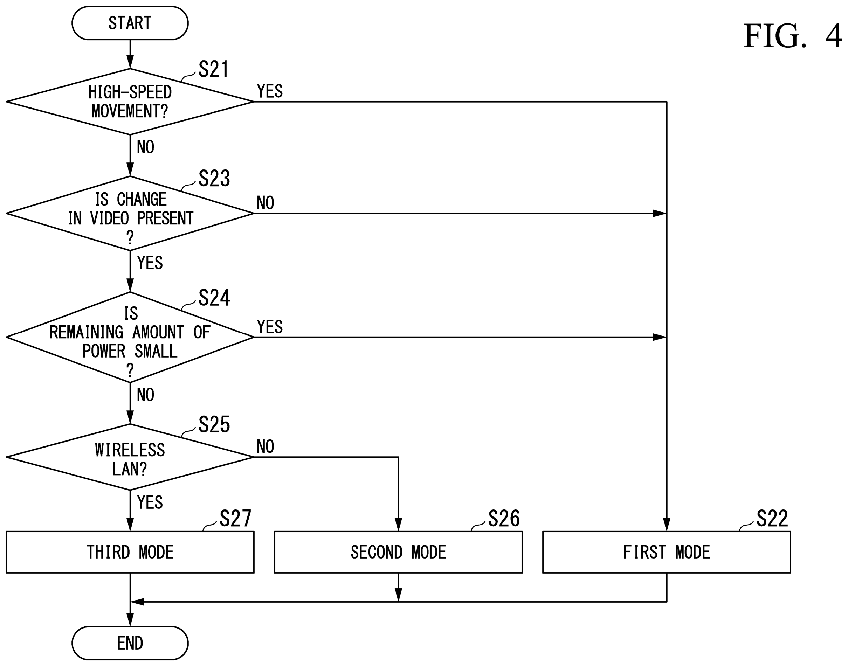

FIG. 4 is a flowchart illustrating an example processing that is performed in Step S13 of FIG. 3. The processing of the flowchart shown in FIG. 4 is repeatedly performed from when image capturing is started until image capturing ends. When the processing is started, first, the control unit 17 determines the presence or absence of high-speed movement of the camera device 10 (Step S21). For example, the control unit 17 obtains a movement speed of the camera device 10 using a detection result of the sensor 15 and determines the presence or absence of high-speed movement of the camera device 10 according to whether the obtained movement speed is equal to or higher than the predetermined speed.

When determination is made that the camera device 10 is moving at the high speed (when the determination result of Step S21 is "YES"), the control unit 17 executes the first mode (Step S22). Specifically, the control unit 17 generates a still image from the video captured by the camera 12 at regular intervals, transmits the still image to the video provision device 20 via the network N1, and causes the storage unit 14 to store the video captured by the camera 12. When the camera device 10 is moving at the high speed, it is considered that the video captured by the camera 12 is corrupted (blurred). Further, when the camera device 10 performs communication by way of a wireless LAN, it is considered that the camera device 10 is likely to deviate from a wireless communication available area. For this reason, the first mode in which regular transmission of a still image is performed via the network N1 is executed.

In contrast, when determination is made that the camera device 10 is not moving at the high speed (when the determination result of Step S21 is "NO"), the control unit 17 determines the presence or absence of change in video captured by the camera 12 (Step S23). For example, the control unit 17 analyzes a video captured by the camera 12, compare analysis results of videos captured at different two points of time, and determines the presence or absence of change in video captured by the camera 12 according to whether an amount of change in video is equal to or greater than the predetermined threshold.

When determination is made that there is no change in video captured by the camera 12 (when the determination result of Step S23 is "NO"), the control unit 17 executes the first mode (Step S22). When there is no change in video, to suppress a data amount, the first mode in which regular transmission of a still image is performed via the network N1 is executed.

In contrast, when determination is made that there is change in video captured by the camera 12 (when the determination result of Step S23 is "YES"), the control unit 17 determines whether the remaining amount of power of battery 19 is small (Step S24). For example, the control unit 17 determines whether the remaining amount of power of battery 19 is small according to whether the remaining amount of power of battery 19 is equal to or less than the predefined threshold.

When determination is made that the remaining amount of power of battery 19 is small (when the determination result of Step S24 is "YES"), the control unit 17 executes the first mode (Step S22). When the remaining amount of power of battery 19 is small, to suppress the consumption of the battery 19, the first mode in which regular transmission of a still image is performed via the network N1 is executed.

When determination is made that the remaining amount of power of battery 19 is not small (large) (when the determination result of Step S24 is "NO"), determination is performed on whether communication via a communication line other than the network N1 by way of a wireless LAN is possible (Step S25).

When determination is made that communication via a communication line other than network N1 by way of a wireless LAN is not possible (when the determination result of Step S25 is "NO"), the control unit 17 executes the second mode (Step S26). Specifically, the control unit 17 generates a short-time video from the video captured by the camera 12 at regular intervals, causes the short-time video to be transmitted to the video provision device 20 via the network N1, and causes the storage unit 14 to store the video captured by the camera 12.

Taking convenience into consideration, it is desirable to continuously transmit a video. When the remaining amount of power of battery 19 is large, no problems occur even when a video is transmitted continuously, but a data amount to be transmitted via the network N1 increases. Therefore, to increase convenience while suppressing the data amount to be transmitted via the network N1, the second mode in which regular transmission of a short-time video is performed via the network N1 is executed.

In contrast, when determination is made that communication via a communication line other than network N1 by way of a wireless LAN is possible (when the determination result of Step S25 is "YES"), the control unit 17 executes the third mode (Step S27). Specifically, the control unit 17 causes a video captured by the camera 12 to be continuously transmitted to the video provision device 20 via the network N1. When a video at a bit rate equivalent to the captured video is transmitted to the network even in the third mode, the control unit 17 does not cause the storage unit 14 to store the video captured by the camera 12. It should be noted that, in the third mode, when a data transfer amount is made small by a method of decreasing a bit rate of a video to be transmitted, or the like, the captured video before the bit rate is decreased may be stored in the storage unit 14.

Next, the control unit 17 performs control such that the camera 12 ends image capturing (Step S14). The control unit 17 may perform control such that the camera 12 ends image capturing automatically when a predetermined end condition is satisfied (for example, when a predetermined time has elapsed) or may perform control such that the camera 12 ends image capturing when there is an instruction to end image capturing from the operation unit 16.

Subsequently, the control unit 17 determines whether a predetermined condition is satisfied (Step S15). For example, the control unit 17 determines whether communication with the video provision device 20 via a communication line (for example, a communication network that is provided by a telecommunications carrier such as the Internet) by way of a wireless LAN becomes possible, as the above-described predetermined condition. Determination on whether charging is performed with external power may be added to the above-described predetermined condition.

When determination is made that the above-described predetermined condition is not satisfied (when the determination result of Step S15 is "NO"), the control unit 17 repeats the processing of Step S15. In contrast, when determination is made that the above-described predetermined condition is satisfied (when the determination result of Step S15 is "YES"), the control unit 17 causes the video stored in the storage unit 14 to be transmitted to the video provision device 20 via the communication line by way of the wireless LAN. By transmitting the video stored in the storage unit 14 via the communication line by way of the wireless LAN, it is possible to prevent the occurrence of additional communication cost.

The processing (the processing of Step S13 of FIG. 3) shown in FIG. 4 is just an example, and various modifications can be made. For example, the order of Steps S21, S23, and S24 may be exchanged in any order. Further, Steps S21 and S23 may be omitted. A basic policy of the processing (the processing of Step S13 of FIG. 3) shown in FIG. 4 is as described in (a) and (b) described below, and the processing of Steps S21 and S22 can be provided as necessary.
(a) When only communication via the network N1 is possible (when communication via a communication line by way of a wireless LAN is not possible), to improve convenience while reducing a data amount, the first mode or the second mode is executed.
(b) When communication via a communication line by way of a wireless LAN, and the remaining amount of power of battery 19 is large, the third mode is executed.

The control unit 23 of the video provision device 20 causes the storage unit 22 to store a still image, a short-time video, and a continuous video transmitted from the camera device 10. The control unit 23 performs control such that the communication unit 21 outputs (provides), to the terminal device 30, a still image, a short-time video, and a continuous video transmitted from the camera device 10.

For example, the video provision device 20 provides a still image to the terminal device 30 in an aspect in which the content is switched to a new still image each time a still image is transmitted from the camera device 10. The video provision device 20 provides a short-time video in an aspect in which a short-time video transmitted from the camera device 10 is repeatedly reproduced until a next short-time video is transmitted. The video provision device 20 provides a continuous video in an aspect in which a continuous video transmitted from the camera device 10 is reproduced directly. The video provision device 20 automatically switches a provision method with respect to the terminal device 30 according to a classification (distinction of a still image, a short-time video, and a continuous video) of data that is transmitted from the camera device 10.

A still image or a short-time video transmitted from the camera device 10 may be stored in the storage unit 22 of the video provision device 20, and a video (a video stored in the storage unit 14 of the camera device 10) may be transmitted from the camera device 10. In such a case, the control unit 23 of the video provision device 20 may perform recomposition by combing the still image or the short-time video stored in the storage unit 22 and the video transmitted later as a continuous moving image.

As described above, according to the embodiment of the present disclosure, the camera device 10 includes the camera 12 that captures a video, the communication unit 11 that communicates with the video provision device 20, and the processor 18 that is connected to the camera 12 and the communication unit 11. Then, the processor 18 performs control such that the communication unit 11 executes one of the first mode in which a still image based on the video captured by the camera 12 is transmitted at regular intervals, the second mode in which a short-time video based on the video captured by the camera 12 is transmitted at regular intervals, and the third mode in which the video captured by the camera 12 is transmitted continuously. As a result, it is possible to increase convenience while suppressing the data amount of transmission data as much as possible.

Although the camera device, the video provision system, the video provision method, and the program according to the embodiment of the present disclosure have been described, the present disclosure is not limited to the above-described embodiment, and alterations can be freely made within the scope of the present disclosure. For example, the video provision device 20 described in the above-described embodiment may be implemented as a server device or may be implemented by a cloud computing system.

In the above-described embodiment, an aspect in which the video provision device 20 provides a video to the terminal device 30 via the network N2 has been described. Alternatively, for example, when the video provision device 20 is provided in a monitoring center, an aspect may be made in which the video provision device 20 and the terminal device 30 are integrated. In such an aspect, a still image, a short-time video, and a continuous video are displayed on a display device (a configuration corresponding to the display unit 33) connected to the video provision device 20.

## Claims

1. A camera device comprising:
a camera configured to capture a video;
a communication device configured to communicate with an external device; and
a processor connected to the camera and the communication device,
wherein the processor is configured to control the communication device to execute one of a first mode in which a still image based on the video captured by the camera is transmitted at regular intervals, a second mode in which a short-time video based on the video captured by the camera is transmitted at regular intervals, and a third mode in which the video captured by the camera is transmitted continuously.

2. The camera device according to claim 1, further comprising:
a storage unit configured to store the video captured by the camera,
wherein the processor is configured to store the video captured by the camera in the storage unit when the processor executes the first mode or the second mode.

3. The camera device according to claim 1,
wherein the processor is configured to switch whether to execute the first mode, the second mode, or the third mode, according to a communication situation with the external device.

4. The camera device according to claim 1, further comprising:
a battery configured to supply power to at least the processor, the camera, and the communication device,
wherein the processor is configured to switch whether to execute the first mode, the second mode, or the third mode, according to a remaining amount of power of the battery.

5. The camera device according to claim 1, further comprising:
a sensor configured to detect at least one of a position and an acceleration,
wherein the processor is configured to switch whether to execute the first mode, the second mode, or the third mode, according to a detection result of the sensor.

6. The camera device according to claim 5,
wherein the processor is configured to switch to execute the first mode when the processor has determined that a movement speed of the camera device is equal to or higher than a predetermined speed, on the basis of the detection result of the sensor.

7. The camera device according to claim 1,
wherein the processor is configured to switch whether to execute the first mode, the second mode, or the third mode, according to an analysis result of the video captured by the camera.

8. The camera device according to claim 7,
wherein the processor is configured to switch to execute the first mode when the processor has determined that an amount of change in the video is equal to or smaller than a predetermined threshold, on the basis of an analysis result of the video captured by the camera.

9. The camera device according to claim 2,
wherein the processor is configured to control the communication device to transmit the video stored in the storage unit, when the processor has determined that a predetermined condition is satisfied.

10. The camera device according to claim 9,
wherein the predetermined condition includes a condition that communication with the external device is possible via a communication network provided by a telecommunications carrier.

11. The video provision system comprising:
the camera device according to any one of claims 1 to 10; and
a video provision device as the external device that is connected to the camera device in a communicative manner and is configured to provide the still image, the short-time video, and the video transmitted from the camera device.

12. The video provision system according to claim 11, further comprising:
a terminal device that is connected to the video provision device in a communicative manner and is configured to display the still image, the short-time video, and the video provided from the video provision device.

13. A video provision method performed by a video provision system comprising a camera device configured to capture a video, and a video provision device configured to provide the video captured by the camera device to an outside, the video provision method comprising:
executing, by the camera device, one of a first mode in which a still image based on the captured video is transmitted at regular intervals, a second mode in which a short-time video based on the captured video is transmitted at regular intervals, and a third mode in which the captured video is transmitted continuously; and
providing,by the video provision device, the still image, the short-time video, and the video transmitted from the camera device to the outside.

14. A non-transitory computer readable storage medium that stores a program that causes a computer connected to a camera configured to capture a video and a communication device configured to communicate with an external device to:
control the communication device to execute one of a first mode in which a still image based on the video captured by the camera is transmitted at regular intervals, a second mode in which a short-time video based on the video captured by the camera is transmitted at regular intervals, and a third mode in which the video captured by the camera is transmitted continuously.
